Europäisches Patentamt

European Patent Office

Office européen des brevets

(19)

(11) **EP 1 348 954 A1**

(12) **EUROPEAN PATENT APPLICATION**

(43) Date of publication:
  **01.10.2003 Bulletin 2003/40**

(51) Int Cl.⁷: **G01N 29/10**, G01V 1/52,
  B06B 1/06, E21B 47/10

(21) Application number: **02290776.0**

(22) Date of filing: **28.03.2002**

(84) Designated Contracting States:
  **AT BE CH CY DE DK ES FI FR GB GR IE IT LI LU
  MC NL PT SE TR**
  Designated Extension States:
  **AL LT LV MK RO SI**

(71) Applicant: **SERVICES PETROLIERS
  SCHLUMBERGER
  75007 Paris (FR)**

(72) Inventor: **Froelich, Benoit
  78160 Marly-le-Roi (FR)**

(74) Representative: **Weihs, Bruno
  Rosenthal & Osha S.A.R.L.
  121, avenue des Champs Elysées
  75008 Paris (FR)**

(54) **Apparatus and method for acoustically investigating a borehole by using a phased array sensor**

(57)    A tool for investigating a borehole comprises one or two matrices of acoustical transducer elements organised on respective cylindrical surfaces as phased arrays. Each transducer element of the respective matrices may be individually excited or measured. The tool allows for generation of a number of type of beams. e. g. focused or unfocused on the inner wall of the borehole, in directions normal or non normal to the inner wall. Methods for compensating eccentricity of the tool and for detemining sound velocity in fluid are presented.

FIG.3

EP 1 348 954 A1

FIG.5

## Description

### Field of the invention

The invention generally relates to an apparatus and method for acoustically investigating a wall of a borehole penetrating an earth formation. More specifically, the invention allows acoustical measurement of a set cement casing in a borehole.

### Background of the invention

Acoustic pulse echo techniques for investigating a casing set in a borehole are known in the art.

After the cement of the casing has set in the borehole it is common practice to use acoustic non-destructive testing methods to assess its integrity. One example of an apparatus for acoustically investigating a borehole is disclosed in U.S. Patent No. 4,382,290. A pulse echo tool comprising an ultrasonic transducer is introduced in the borehole, and the decay rate of an acoustic wave after reflection at normal incidence to the casing is then analysed. The tool is rotated in order to investigate the whole circumference of the casing around the rotation axis of the tool.

As the tool is often surrounded by fluids, it is not unusual to encounter technical problems when trying to rotate the tool due to viscous drag. This may lead to system failures and time consuming repetition of measurements.

There exist a plurality of measurement objectives that may need to be achieved. Each determined objective of measurement requires a specific type of acoustic transducer in the pulse-echo tool to be selected. A first type of transducer may be adapted to produce an unfocused beam commonly used for cement evaluation. A second type of transducer may be specialized to focus the acoustical beam in order to perform high resolution wall imaging. Thus depending on the measurement objective it will be necessary to extract the pulse-echo tool from the borehole in order to exchange the acoustical transducers. This leads to an increase in the time required for measurement and causes additional costs.

Using phased arrays of acoustical transducers to produce a beam that may be electronically controlled is know in the art. Each element of the array may be activated separately at any time to produce a beam. An electronic delay may be applied to each electronic channel connected to an element when emitting and receiving a signal to or from the acoustical transducers. An appropriate combination of delays applied to each electronic channel defines a different acoustic beam with particular direction, focusing distance and lateral resolution. This allows a user to electronically scan a beam across the length of the phased array or to electronically focus the beam. Furthermore, it is possible to steer the beam. A linear or circular phased array allows for beam steering in a single plane. A matrix array allows for beam steering in all directions.

A circular phased array of transducers may be used to inspect the inside of tube. Such a circular phased array is for example described in a commercial brochure from the IMASONIC S.A. company, entitled Outlines - Ultrasonic Solution for NDT, January 2001. The circular array is introduced inside a tube and an acoustic beam produced in direction of the tube wall. The beam may be electronically rotated, and hence, the whole circumference of the inner tube may be evaluated without rotating the circular array itself. This reduces failures due to viscous drag encountered in the fluid environment of the borehole. Also the beam may be electronically focused to allow one to perform different types of measurements on the wall, e.g., focused or unfocused, without extracting and replacing the transducers for each measurement as is the case in the prior art. Hence, a greater number of measurements may be performed in a shorter period of time.

In order to obtain accurate results of inspection, the circular phased array must be positioned with its centre on the axis of the tube being inspected. In case the centre of the array if offset from the axis, the wavefront of the acoustic beam produced by the transducers may impact the tube wall at non normal incidence. Furthermore, after reflection on the wall, the wavefront may not match a receiving aperture of the measuring transducers. These effects typically lead to an amplitude drop and distortion of the expected response.

A specific type of measurement to be made in the borehole involves acoustic waves that propagate towards the casing walls in a direction deviating from a direction normal to the wall of the casing. This specific geometry has been described in the international patent application published under W099/35490, which is incorporated here by reference. The geometry, also known as pitch/catch geometry, uses a pair of transducers. One transducer is used as transmitter while the other is used as receiver. The transducers are mounted in appropriate angles along the axis of the tool with an offset. The so-obtained tool is rotated in order to investigate the whole circumference of the cement casing.

In order to perform measurements using the pitch/catch geometry, at least two solutions are known. The first solution is to insert a specific tool in the borehole, and therefore to extract any other tool that might have been used to perform different measurements. This is time consuming and costly. The second solution is to mount the measurement apparatus in the same tool that uses a circular phased array of transducers as previously described. This bears the disadvantage that the tool has an increased overall size, and that it needs to be rotated to apply the pitch/catch measurements to the whole circumference of the casing, thereby experiencing the viscous drag of the fluids in the borehole.

**Summary of the invention**

In a first aspect, the invention provides a tool for investigating a borehole, comprising acoustic transducers elements in a phased array which a organized in a first matrix on a cylindrical surface.

Advantageously, the tool comprises further acoustic transducer elements which are organized in a second matrix distinct form the first matrix on a cylindrical surface.

Appropriately, the cylindrical surfaces carrying the first and second matrix are mounted on the tool such that the transducer elements on the first and second matrix are directed to an inner wall of the borehole.

Appropriately, each transducer element is connected to an electronic driver circuit which allows an individual excitation of the transducer element.

Appropriately, the electronic driver circuit is adapted to generate in each of the first and second matrix a time delay between individual excitations of distinct transducer elements in order to generate at least one of the following : a beam focused on the inner wall of the borehole, a beam unfocused on the inner wall, a beam oriented in a direction normal to the inner wall, a beam oriented in a direction non normal to the inner wall.

Preferably each element is connected to an electronic measuring circuit which allows an individual processing of a signal received from the transducer element.

Preferably the electronic measuring circuit is adapted to generate in each of the first and second matrix a time delay between individual processing of distinct transducer elements in order to take into account at the receiving of a beam on the transducer elements, a determined type of beam generated by the driving circuit and returned by the wall of the borehole.

Preferably the electronic measuring circuit of transducer element in the second matrix is used to measure an acoustic beam generated by the electronic driver circuit of the first matrix and returned by the wall of the borehole.

Advantageously, the electronic driver circuit comprises an adjustable delay inducing means and a pulser connected to a transducer element, the pulser being adapted to receive a signal which is delayed using the adjustable delay inducing means, and to excite the transducer element upon receiving the delayed signal.

Advantageously, the electronic measuring circuit comprises a programmable gain amplifier connected to a transducer element, and adjustable delay inducing means, the programmable gain amplifier being adapted to amplify a signal received from the transducer element and to transmit the amplified signal to the delay inducing means.

In a second aspect, the invention provides a method for investigating a borehole, in which a tool is introduced in a borehole, and in which the fluid velocity is determined as follows :

selecting a first transducer element or a first group of elements at a determined distance of the inner wall of the borehole and measuring a first time delay between emitting an acoustic beam and receiving the acoustic beam after reflection on the inner wall using the first transducer,
selecting a second transducer element or a second group of elements at the determined distance of the inner wall, the second and the first transducer elements or group of elements being at a predetermined distance from each other on a line parallel to the inner wall, and measuring a second time delay between emitting an acoustic beam with the first transducer element or group of elements and receiving the acoustic beam after reflection on the inner wall on the second transducer element or group of elements,
computing the fluid velocity and the determined distance using the first and second time delay.

In a further aspect, the invention provides a method for investigating a borehole, in which a tool is introduced in a borehole, and in which a determined eccentering of the tool as compared to the borehole is electronically compensated to obtain a circular wavefront centred on a centre of the borehole as follows :

the determined eccentering value is measured,
a path difference for a first and a second transducer element is computed by respectively determining the distance of a first and a second transducer element to the inner wall and by subtracting the distance values,
applying a time delay between an excitation of the first transducer element and an excitation of the second transducer element corresponding to the time required for an acoustic beam to travel the path difference.

**Brief description of the Figures**

The invention will now be described in greater detail with reference to the accompanying drawings, in which :

Figure 1 schematically represents an linear transducer array used for generating a planar wavefront;

Figure 2 schematically illustrate a circular array used for generating a planar wavefront;

Figure 3 schematically illustrates a cylindrical array according to the invention ;

Figure 4 illustrates a side view of a cylindrical array used to generate a planar wavefront;

Figure 5 illustrates an example of an acoustical beam generated with a tool according to the invention ;

Figure 6 illustrates a further example of an acoustical beam generated with a tool according to the invention ;

Figure 7 illustrates a further example of an acoustical beam generated with a tool according to the invention ;

Figure 8 schematically illustrates two cylindrical arrays in a pitch/catch geometry according to the invention ;

Figure 8B schematically represents transducer elements used for determining fluid velocity;

Figure 9 schematically illustrates a cylindrical array eccentered as compared to a tube ;

Figure 10 schematically illustrates an electronic driver circuit;

Figure 11 schematically represents an electronic measuring circuit.

**Description of the preferred embodiments**

**Generation of an acoustical beam**

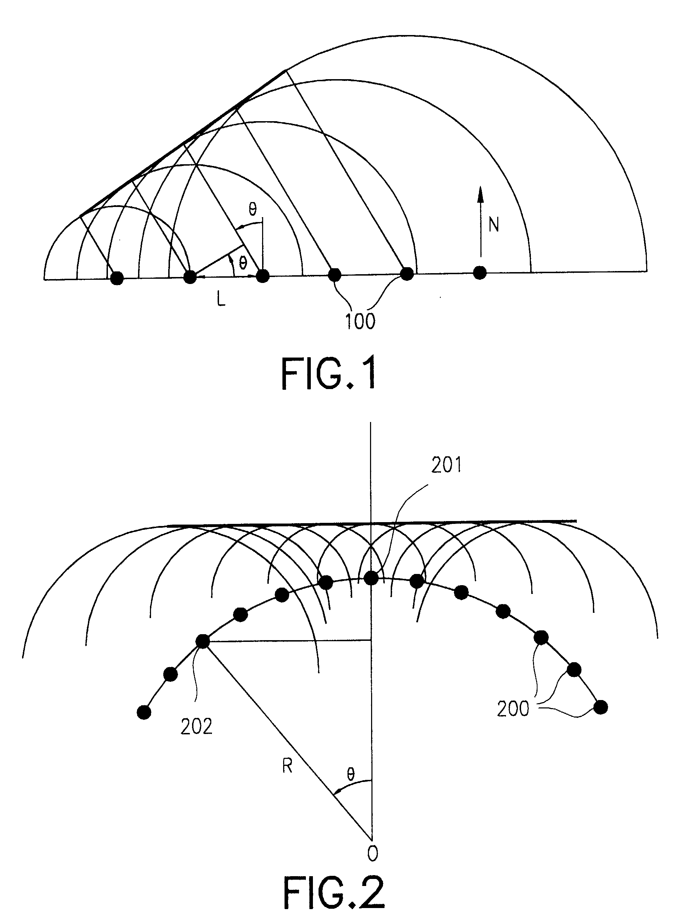

Referring to Fig. 1, a surface of an ultrasonic array is schematically represented by an array of elements 100 shown here as dots. Each element 100 is connected to appropriate control circuitry (not shown) and may be excited separately. The lateral size of these elements 100 is usually selected to be smaller than the acoustic wavelength, so that each element 100 may be considered as an omni directional point source radiating spherically into the fluid medium surrounding the array. For imaging applications, a short pulse excitation of the elements 100 is preferred in order to get a depth resolution. The excitation may in principle be controlled both in amplitude and delay.

Each element 100 may also be used as a receiver transducer, generating a signal when receiving an acoustic beam (not shown), the signal being characteristic of the amplitude and duration of the acoustic beam.

By controlling the delay applied to each of the elements 100, it is possible to shape the beam emitted by an ensemble of elements. Accordingly, a variety of purposes may be achieved : beam steering, focusing/defocusing, etc...

The elements 100 make up an array of equidistant sources, separated by an interval L. To generate a wavefront plane propagating at an angle $\theta$ from the direction normal to the array, which is represented by an arrow N, it is required to apply a constant delay $\Delta t$ between the excitation of the individual sources. This delay corresponds to $\Delta t = \sin(\theta)*L/c$, where $c$ is the sound speed in the medium, and $\sin(\theta)*L$ is the travel path difference between each element 100.

Referring to Fig. 2, the generation of a planar wavefront using a circular array of elements 200 is explained. The circular array has a centre O and each element 200 is at a distance R from the centre O. In this case, the delay $\Delta t$ separating an excitation of a central element 201 and an element 202 at an angular position $\theta$ is $\Delta t = (1-\cos(\theta))*R/c$. Of course the delays are different for each element 200 contributing to the planar wavefront and making up the aperture.

The application of delays when exciting the elements of a linear or circular array have been explained for generating a planar wavefront. In a similar manner, the application of delays to the elements may in fact be used to deflect a beam in a plane or to focus the beam to a particular spot on the tube wall.

Generally the beam forming which is applied at emission of an acoustic beam, may also be applied at reception with the same delays but with inverted signs : the signals received by each element are first delayed with respect to each other, before being summed in order to provide the required beam characteristics.

The linear and the circular arrays described in relation to Fig. 1 and Fig. 2 allow for deflection of a beam or generation of a planar wavefront propagating in a direction that remains in a plane corresponding to the plane of the drawings. In the environment where the arrays are used for measuring in a tube, this direction corresponds to a plane that is normal to the axis of the tube. For reasons of convenience, we will use the term "vertical direction" when referring to the axis of the tube, and "horizontal" for the plane that is normal to the vertical direction. Of course, the vertical direction will depend on the actual orientation of the tube at the precise spot of the tube at which the tool is positioned. Hence, the vertical direction corresponds to the direction of the rotation axis in the circular array in Fig. 2, which passes through the centre O.

In order to perform a measurement in a pitch/catch geometry in the vertical direction, it is necessary to generate a planar wave having a propagation direction at an angle away from the horizontal plane.

**Cylindrical arrays**

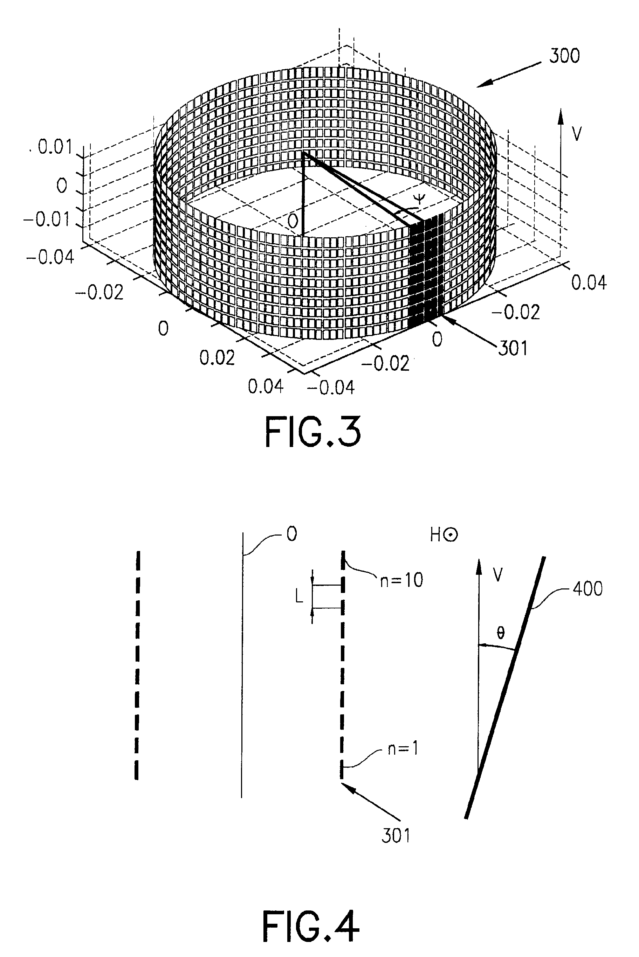

Fig. 3 shows an example of a cylindrical array 300 with a vertical axis in a direction represented by an arrow V. The cylindrical array 300 comprises 128*10 transducer elements, which may be excited individually.

The cylindrical array 300 may be used in a similar way as the above described circular array to generate a planar wave or an acoustical beam in a horizontal plane. In addition, the cylindrical array 300 may be used to generate a planar wave or an acoustical beam at an angle away from the horizontal plane. This makes the cylindrical array 300 suitable for pitch/catch geometry measurements. When generating a planar wave using, for example, a matrix of 5*10 active elements represented in darkened squares of the cylindrical array 300, a combination of a planar wave generated by 5 linear arrays and 10 circular arrays is obtained. The linear arrays correspond to the 5 rows of elements in vertical direction whereas the circular arrays correspond to the 10 circular rows in horizontal direction. The matrix of 5*10 elements may also be called the "aperture". If a planar wave or a beam is to be generated, the time delays between excitations applied to each element of the aperture may be computed as a combination of the delays previously computed for the linear and circular arrays in relation to Fig. 1 and 2.

Fig. 4 illustrates a view of the cylindrical array 300 shown in Fig. 3, along a plane passing through a vertical row of transducer elements 301 and a central axis going through the centre O. The time delay $\Delta t_{v,n} = (n\text{-}1)\sin(\theta)*L/c$ is the time delay to apply between the excitation of the 1st element (n=1) and the excitation of the nth element (n<=10) (see Fig. 4) in a vertical row, e.g., in row 301, when generating a planar wave 400 inclined in an angle θ from the vertical direction V, the elements being in a distance L from each other, and c being the sound speed in the medium surrounding the cylindrical array 300.

$\Delta t_{h,\Psi,n} = (1 - \cos(\Psi))*R/c$ is the time delay to apply between the excitation of each element part of the circular array in the considered aperture, $n = 1...10$ being the number of the circular array, and Ψ being the angle between the element considered and a central element in a central row 301, for a planar wave having an horizontal orientation parallel to the tangent at the central row as represented by the arrow H.

The time delays $\Delta t_{v,n}$ and $\Delta t_{h,\Psi,n}$ are added and the total time delay is applied as appropriate for exciting each element of the aperture.

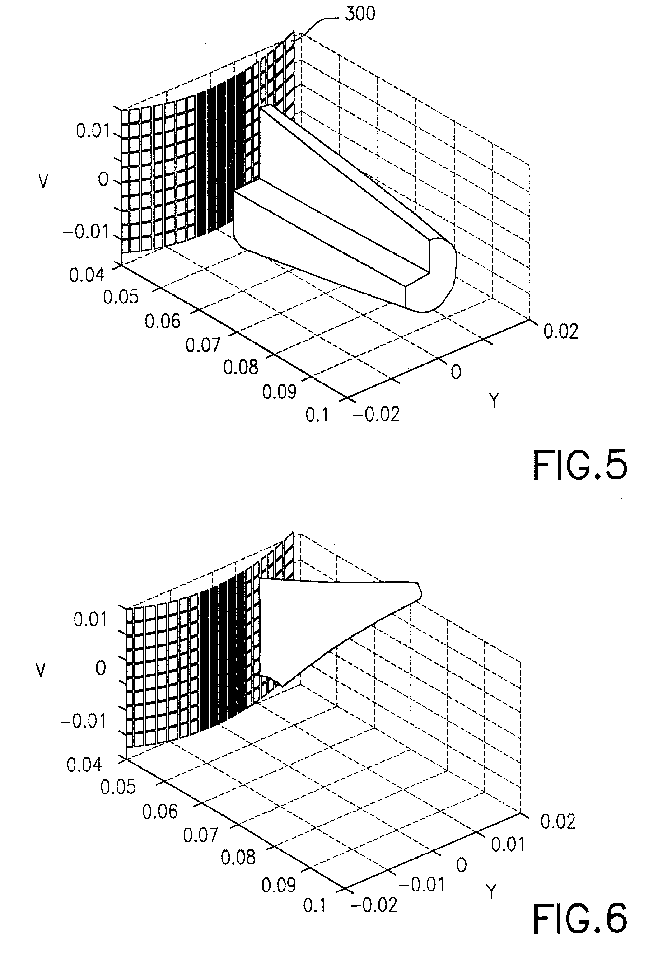

Fig. 5 illustrates an example of use of the cylindrical array to generate an unfocused acoustic beam. The beam is generated using the 5*10 aperture of active elements, shown as dark coloured elements, and hits the tube wall (not shown) at coordinates X=0.1 and Y=0 in a direction normal to that wall. This type of beam is typically used for evaluation of the cement in the tube casing. After reflection on the wall the beam returns to the aperture of active elements that are then used as acoustic sensors. The beam may be rotated all around the cylindrical array by displacing the aperture and applying a similar signal pattern as before to the elements of the new aperture.

Fig. 6 illustrates a further example of use of the cylindrical array to generate an unfocused acoustic beam that reaches the tube wall in a non normal direction. This type of beam might conveniently be used in a pitch/catch geometry measurement.

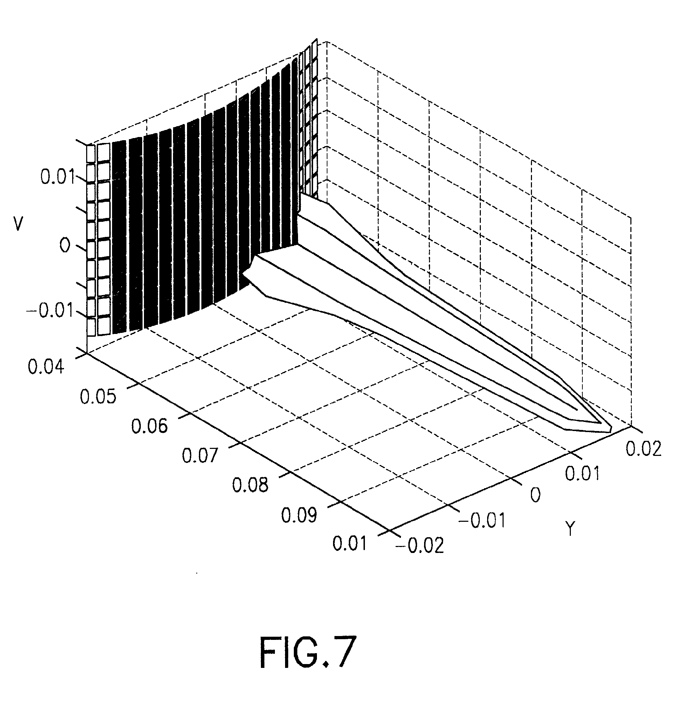

Fig. 7 illustrates yet another example in which the cylindrical array is used to generate a focused acoustic beam, which incidentally is focused in horizontal and vertical directions. This type of beam is typically used to perform high-resolution wall imaging.

**Pitch/catch measurement geometry**

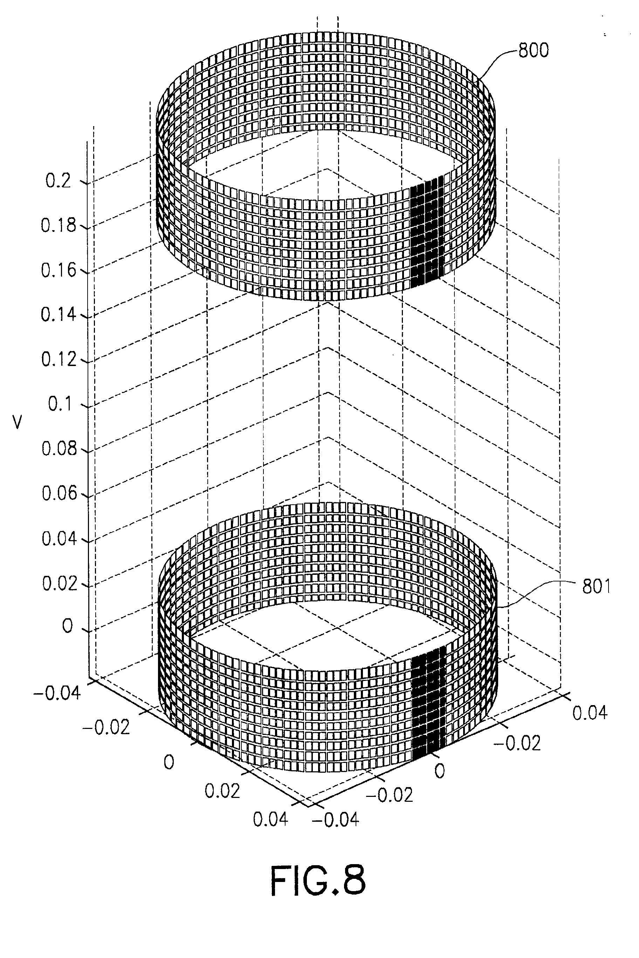

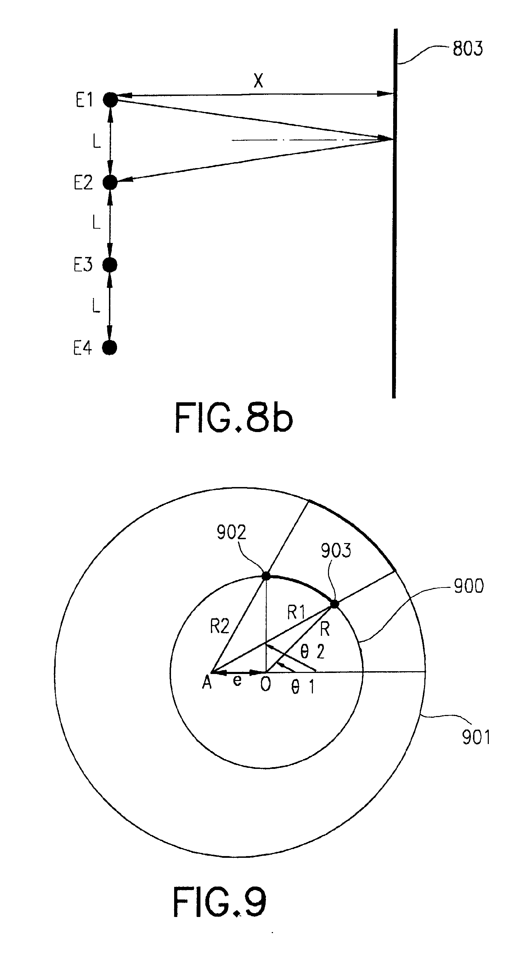

Fig. 8 schematically illustrates a configuration in which two cylindrical arrays 800 and 801 are used to perform measurements in a pitch/catch geometry. The cylindrical array 801 may be used as an emitter to emit a beam in a direction non-normal to the wall of the tube casing, as shown in Fig. 6 and the cylindrical array 800 as a receiver to measure the transmitted beam.

Preferably, both cylindrical arrays 800 and 801 are arranged on a tool (not shown) such that they have a same vertical rotation axis.

The inventive tool comprising two cylindrical arrays as shown in Fig. 8 may advantageously perform tasks that used to be performed using different tools in the prior art. The inventive tool may be used to perform conventional cement and wall mapping in a horizontal plane, thus replacing a circular array. It may at the same time be used to perform pitch/catch measurement as previously explained. There is thus no need to change the tools between each measurement.

The inventive tool further integrates advantageous features previously known from the circular arrays, in that the tool may be used to investigate the whole circumference of the tube casing without rotating the tool. Indeed the beam may be rotated electrically. This also bears the advantage that the beam may be rotated at a relatively high speed as compared to mechanically rotating the tool in the surrounding fluid. This results in an increase of speed for the measurements. A further possibility of increasing the speed of measurement is to generate a plurality of beams simultaneously in separate apertures and then to rotate each beam synchronously.

**Measuring fluid velocity**

The use of one or more cylindrical arrays enables the computation of fluid velocity in fluids flowing past the tool in the tube. The fluid velocity is the speed at which the sound travels in the fluid. The fluid velocity depends on the nature of the fluid (e.g., water, gas, oil). This is made possible because of the discrete nature of the elements making up the cylindrical arrays and their arrangement along the tube casing. Fig. 8B represents two discrete elements E1 and E2 of an array which are arranged parallel and in a distance x to the wall 803. If the single element E1 is used to transmit a pulse, and this pulse is received on the other distinct element E2, then the distance x and the fluid velocity c can be extracted from 2 transit time measurements t1 and t2 of the beam between E1 and the wall or E1 and E2 respectively. The distance separating E1 and E2 is L. The transit times correspond to following relations :
$t_1 = 2\frac{x}{c}$ for the distance between E1 and the wall, and

$$t_2 = 2\,\frac{\sqrt{(L/2)^2 + x^2}}{c}$$

for the distance between E1 and E2 through reflection on the wall.

The values of c and x may be extracted as follows :

$$c = \frac{L}{\sqrt{t_2^2 - t_1^2}},$$

and

$$x = \frac{t_1 L}{2\sqrt{t_2^2 - t_1^2}}.$$

Whilst the example described herein involves discrete elements E1 and E2 to transmit and receive a pulse, it would be possible to use a group of elements instead of E1 and/or E2. Also the example uses elements which are aligned in vertical direction. Alternatively it would be possible to use elements which are in a same horizontal plane or each in different horizontal and vertical planes. It is merely necessary to adapt the formulas used for calculating the transit times and the resulting values of c and x.

The fluid velocity measurement method described herein provides enhanced precision as compared to conventional methods, e.g., conventional methods in which the velocity is measured while tripping down the tool and obtained as an extracting of an averaged value. Indeed the inventive measurement method enables a continuous and simultaneous measurement of the fluid velocity c, which is required to compute the time delays to adjust the excitations during generation of acoustical beams. The result is an overall improvement in the quality and precision in measurements, because the parameters leading to the generation of the measuring beams may continuously be monitored and corrected if necessary.

The computation of the fluid velocity may be improved by performing additional measurements of transit times between E1 and other discrete elements of the same cylindrical array after reflection on the casing wall, eg., E3 or E4, or using discrete elements of the second cylindrical array.

**Eccentering**

The calculations presented herein have assumed that the cylindrical arrays are centred in the tube, i.e., have their rotation axis in the centre of the tube casing oriented in vertical direction. However in practice it appears very difficult to achieve a perfect centering of the cylindrical array within the tube to be imaged. Often the rotation axis of the cylindrical array 900, represented as O in Fig. 9, is offset by an amount e from the centre A of the tube 901. If no delay is applied on the active elements of the array, a circular wavefront will impact the tube wall at non-normal incidence, and after reflection will not match the receiving aperture on the array.

Assuming that the eccentering e and the fluid velocity c are known, e.g., from a previous measurement of the fluid velocity all around the cylindrical array as explained above herein, then it is possible to apply delays so that a generated circular wavefront is centred in A, and its direction of propagation becomes normal to the tube wall. The geometric travel path difference from elements 902 and 903 at angles θ2 and θ1 departing from the line passing through A and O, to the tube wall is simply $\Delta R = R1 - R2$, R1 and R2 being the distance between A and respectively elements 903 and 902. Hence, the time delay to apply excitation to the elements 902 and 903 is :

$$\Delta t = \Delta R/c = (R1-R2)/c.$$

The path difference $\Delta R$ may be expressed as a function of e, θ1 and θ2 as follows :

$$\Delta R = R1 - R2 = \sqrt{e^2+R^2+2eR\cos\theta1} - \sqrt{e^2+R^2+2eR\cos\theta2}$$

Assuming the distance e is small to R, the foregoing expression may be simplified :

$$\Delta R = e(\cos\theta1-\cos\theta2)$$

A further simplification can be made if the angle $\Delta\theta = \theta1-\theta2$ separating the elements is relatively small :

$$\Delta R = -e\Delta\theta\sin\theta2$$

Thus, any time delay can be computed easily for every element of the cylindrical array to compensate for an eccentered position of the array relative to the tube. This leads to an overall improvement in the amplitudes and distortions of the measured signals.

**Control circuitry**

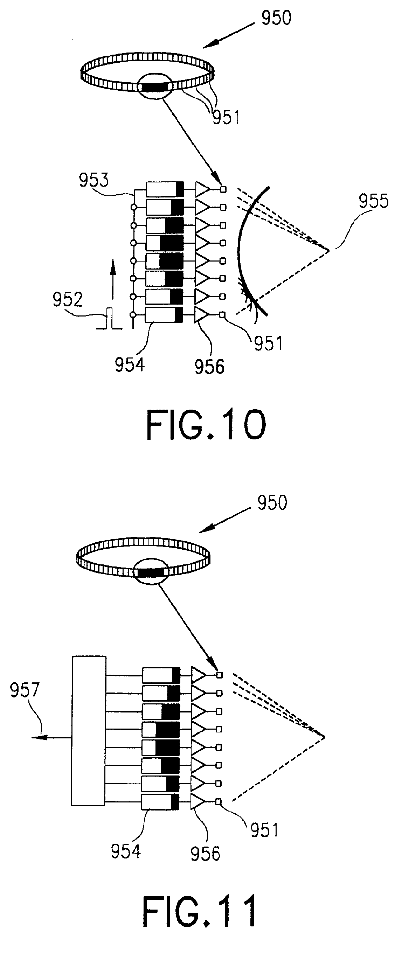

It has been previously mentioned that each element of a cylindrical array may be excited separately. Referring to Fig. 10 an example of a device for producing such excitation is shown. A cylindrical array can be considered as being made out of a plurality of rings 950 which are superposed. Each ring comprises a plurality of transducers 951 which are also represented separately in Fig. 10. The transducers are excited through analog multiplexing. A pulse 952 is input on input line 953 to programmable delay inducing means 954. The present example shows an example of delays for emitting a beam focused on point 955. The dark coloured filling in the representation of the delay inducing means is proportional to the induced delay. The pulse then feeds each pulser 956, generating an excitation of the respective transducers 951.

Alternatively, the input line 953 may be programmed to address a specific single element or a group of elements of the array.

Fig. 10 shows a specific example of an acoustic beam. Any other beam may be obtained by appropriate setting of the delay inducing means.

Fig. 11 shows the device previously described in Fig. 10, used here as a receiving array. It is to be noted that the pulsers of Fig. 10 are now used as programmable gain amplifiers 956 which amplify the signals produced by the transducers 951 on detecting an acoustic beam. The gain amplifiers output the amplified signal to the delay inducing means 954, that have been programmed with focusing delays in accordance with the expected shape of wavefront to be measured or to take into account a specific shape of the array itself. The output of the delay inducing means 954 is periodically scanned at port 957 and the signals measured for processing.

**Claims**

1. A tool for investigating a borehole, the tool (300 ; 800) comprising acoustic transducer elements in a phased array, the transducer elements being organized in a first matrix on a cylindrical surface.

**2.** A tool according to claim 1, the tool (800) comprising further acoustic transducer elements, the transducer elements being organized in a second matrix distinct from the first matrix on a cylindrical surface (801).

**3.** A tool according to claim 2, in which the cylindrical surfaces carrying respectively the first and the second matrix are mounted on the tool such that the transducer elements on the first and second matrix are directed to an inner wall of the borehole.

**4.** A tool according to anyone of claims 1 to 3, each transducer element (951) being connected to an electronic driver circuit (952, 953, 954, 956) which allows an individual excitation of the transducer element.

**5.** A tool according to claim 4, the electronic driver circuit being adapted to generate in each of the first and second matrix a time delay between individual excitations of distinct transducer elements in order to generate at least one of the following : a beam focused on the inner wall of the borehole, a beam unfocused on the inner wall, a beam oriented in a direction normal to the inner wall, a beam oriented in a direction non normal to the inner wall.

**6.** A tool according to anyone of claims 4 to 5, each element (951) being connected to an electronic measuring circuit (956, 954, 957) which allows an individual processing of a signal received from the transducer element.

**7.** A tool according to claim 6, the electronic measuring circuit being adapted to generate in each of the first and second matrix a time delay between individual processing of distinct transducer elements in order to take into account at the receiving of a beam on the transducer elements, a determined type of beam generated by the driving circuit and returned by the wall of the borehole.

**8.** A tool according to claim 7, the electronic measuring circuit of transducer element in the second matrix being used to measure an acoustic beam generated by the electronic driver circuit of the first matrix and returned by the wall of the borehole.

**9.** A tool according to anyone of claims 4 or 5, the electronic driver circuit comprising an adjustable delay inducing means (954) and a pulser (956) connected to a transducer element (951), the pulser being adapted to receive a signal which is delayed using the adjustable delay inducing means, and to excite the transducer element upon receiving the delayed signal.

**10.** A tool according to anyone of claims 6 to 8, the electronic measuring circuit comprising a programmable gain amplifier (956) connected to a transducer element, and adjustable delay inducing means (954), the programmable gain amplifier being adapted to amplify a signal received from the transducer element and to transmit the amplified signal to the delay inducing means.

**11.** A method for investigating a borehole, in which a tool according to anyone of claims 1 to 10 is introduced in a borehole, and in which the fluid velocity ( c ) is determined as follows :

selecting a first transducer element (E1) or a first group of elements at a determined distance (x) of the inner wall of the borehole and measuring a first time delay (t1) between emitting an acoustic beam and receiving the acoustic beam after reflection on the inner wall using the first transducer,
selecting a second transducer element (E2) or a second group of elements at the determined distance (x) of the inner wall, the second and the first transducer elements or group of elements being at a predetermined distance (L) from each other on a line parallel to the inner wall, and measuring a second time delay (t2) between emitting an acoustic beam with the first transducer element or group of elements and receiving the acoustic beam after reflection on the inner wall on the second transducer element or group of elements,
computing the fluid velocity and the determined distance using the first and second time delay.

**12.** A method for investigating a borehole, in which a tool according to anyone of claims 1 to 10 is introduced in a borehole, and in which a determined eccentering (e) of the tool (900) as compared to the borehole (901) is electronically compensated to obtain a circular wavefront centred on a centre (A) of the borehole as follows :

the determined eccentering value is measured,
a path difference for a first and a second transducer element is computed by respectively determining the distance of a first (902) and a second (903) transducer element to the inner wall and by subtracting the distance values,

applying a time delay between an excitation of the first transducer element and an excitation of the second transducer element corresponding to the time required for an acoustic beam to travel the path difference.

**13.** A method for investigating a borehole, in which a tool according to anyone of claims 1 to 10 is introduced in a borehole.

FIG.1

FIG.2

FIG.3

FIG.4

FIG.5

FIG.6

FIG.7

FIG.8

FIG.8b

FIG.9

FIG.10

FIG.11

**European Patent Office**

## EUROPEAN SEARCH REPORT

Application Number

EP 02 29 0776

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 640 371 A (PRIEST JOHN F ET AL) 17 June 1997 (1997-06-17) | 1-9,13 | G01N29/10 G01V1/52 B06B1/06 E21B47/10 |
| A | * abstract; figures 1-3,13 * * column 2, line 64 - line 67 * * column 4, line 51-61 * * column 7, line 26 - line 48 * * column 11, line 40 - line 47 * * column 18, line 66 - column 19, line 57 * | 10,11 | |
| X | EP 0 513 718 A (CHEVRON RES & TECH) 19 November 1992 (1992-11-19) | 1,4,6-9, 13 | |
| A | * abstract; figure 4 * * page 4, line 23 - line 37 * * page 2, line 9 - line 11 * | 2,3,5,10 | |
| X | VOS H C L ET AL: "An ultrasonic circular array transducer for pipeline and borehole inspection" ULTRASONICS SYMPOSIUM, IEEE, 1988, pages 659-661, XP010075531 | 1 | |
| A | * page 659, left-hand column, paragraphs 1,3 * * page 659, right-hand column, paragraph 2 * * page 661; figure 4 * | 2-10,13 | TECHNICAL FIELDS SEARCHED (Int.Cl.7) G01N G01V B06B E21B |
| X | US 5 367 911 A (JEWELL ANDREW D ET AL) 29 November 1994 (1994-11-29) | 1-9,13 | |
| A | * abstract; figure 14 * * column 11, line 7 - column 12, line 49 * | 10,11 | |
| X | WO 01 73478 A (SCHLUMBERGER CA LTD ;BRIE ALAIN (FR); FROELICH BENOIT (FR); SCHLUM) 4 October 2001 (2001-10-04) | 1-9,13 | |
| A | * abstract; claim 18; figures 1,5 * * page 1, line 1 - page 8, line 2 * * page 10, paragraph 4 * | 10,12 | |

-/--

The present search report has been drawn up for all claims

| Place of search | Date of completion of the search | Examiner |
|---|---|---|
| MUNICH | 17 January 2003 | Uttenthaler, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

**Application Number**

EP 02 29 0776

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | GB 2 305 245 A (SCHLUMBERGER LTD) 2 April 1997 (1997-04-02) | 1 | |
| A | * abstract; figures 1,4 * * page 1, paragraph 1 - page 2, paragraph 2 * * page 8, paragraph 3 - last paragraph * | 2-10,13 | |
| T | POGUET J ET AL: "Phased Array technology: concepts, probes and applications" NDT.NET, 'Online! vol. 7, no. 5, 1 May 2002 (2002-05-01), pages 1-4, XP002212809 Retrieved from the Internet: <URL:http://www.ndt.net/article/v07n05/poguet/poguet.htm> 'retrieved on 2002-09-09! * the whole document * | 1-10,13 | |
| A | V. DEUTSCH, M. PLATTE, M. VOGT: "Ultraschallprüfung" 1997 , SPRINGER-VERLAG , BERLIN XP002227724 * page 319, last paragraph - page 321; figures 7.10-7.12 * | 11 | |
| A | US 6 188 643 B1 (HERVE PHILIPPE G ET AL) 13 February 2001 (2001-02-13) * abstract; figures 1,4B * * column 7, line 29 - line 48 * | 12 | |

**TECHNICAL FIELDS SEARCHED (Int.Cl.7)**

The present search report has been drawn up for all claims

| Place of search | Date of completion of the search | Examiner |
|---|---|---|
| MUNICH | 17 January 2003 | Uttenthaler, E |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

European Patent
Office

Application Number

EP 02 29 0776

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

**European Patent Office**

**LACK OF UNITY OF INVENTION SHEET B**

Application Number

EP 02 29 0776

The Search Division considers that the present European patent application does not comply with the requirements of unity of invention and relates to several inventions or groups of inventions, namely:

1. Claims: 1-10 and 13

    The problem of the first invention in claim 10 (claims 1-9, 13 not new) is to improve the electronic measuring circuit for a phased array sensor for investigating a borehole.

    The problem is solved using a programmable gain amplifier connected to each transducer element of the phased array sensor and delay inducing means.

2. Claim : 11

    The problem of the second invention is to determine the nature of the fluid surrounding the phased array sensor in a borehole.

    The problem is solved by determining the velocity of sound in the fluid.

3. Claim : 12

    The problem of the third invention is to decrease the influence on the sensor signals of eccentering of a phased array sensor in a borehole.

    The problem is solved by electronically compensating the eccentering of the phased array sensor

## ANNEX TO THE EUROPEAN SEARCH REPORT
## ON EUROPEAN PATENT APPLICATION NO.

EP 02 29 0776

This annex lists the patent family members relating to the patent documents cited in the above–mentioned European search report.
The members are as contained in the European Patent Office EDP file on
The European Patent Office is in no way liable for these particulars which are merely given for the purpose of information.

17–01–2003

| Patent document cited in search report | | Publication date | Patent family member(s) | | Publication date |
|---|---|---|---|---|---|
| US 5640371 | A | 17–06–1997 | CA | 2145006 A1 | 23–09–1995 |
| | | | GB | 2287789 A ,B | 27–09–1995 |
| | | | NL | 9500554 A ,B, | 01–11–1995 |
| | | | NL | 9900023 A | 02–09–2002 |
| | | | NL | 9900024 A | 02–09–2002 |
| | | | NL | 9900025 A | 02–09–2002 |
| | | | NO | 951027 A | 06–11–1995 |
| EP 0513718 | A | 19–11–1992 | US | 5164548 A | 17–11–1992 |
| | | | EP | 0513718 A2 | 19–11–1992 |
| | | | NO | 921889 A | 16–11–1992 |
| US 5367911 | A | 29–11–1994 | GB | 2253907 A | 23–09–1992 |
| | | | GB | 2280267 A ,B | 25–01–1995 |
| WO 0173478 | A | 04–10–2001 | US | 6474439 B1 | 05–11–2002 |
| | | | AU | 4098701 A | 08–10–2001 |
| | | | GB | 2375174 A | 06–11–2002 |
| | | | WO | 0173478 A2 | 04–10–2001 |
| GB 2305245 | A | 02–04–1997 | CA | 2185412 A1 | 14–03–1997 |
| | | | JP | 9133775 A | 20–05–1997 |
| | | | NO | 963770 A | 14–03–1997 |
| US 6188643 | B1 | 13–02–2001 | AU | 3683195 A | 06–05–1996 |
| | | | CA | 2202490 A1 | 25–04–1996 |
| | | | GB | 2310721 A ,B | 03–09–1997 |
| | | | NO | 971692 A | 13–06–1997 |
| | | | WO | 9612161 A1 | 25–04–1996 |
| | | | US | 5717169 A | 10–02–1998 |

EPO FORM P0459

For more details about this annex : see Official Journal of the European Patent Office, No. 12/82